# FASCICULE DE BREVET EUROPEEN

(11) **EP 1 896 304 B1**
(45) Date de publication et mention de la délivrance du brevet: **19.11.2008**
(21) Numéro de dépôt: 06754366.0
(22) Date de dépôt: 14.06.2006
(51) Int. Cl.: B60S 1/34, B60S 1/32

(54) **BRAS D'ENTRAINEMENT REALISE EN MATERIAU COMPOSITE**
AUS VERBUNDMATERIAL HERGESTELLTER WISCHERARM
WIPER ARM MADE OF COMPOSITE MATERIAL

(30) Priorité: 29.06.2005 FR 0506634
(43) Date de publication de la demande: 12.03.2008
(73) Titulaire: VALEO SYSTEMES D'ESSUYAGE, 78321 La Verrière (FR)
(72) Inventeur: EPINASSE, Philippe, F-63114 Coudes (FR); CERDAN, Jérôme, F-63570 Beaulieu (FR); POTON, Eric, F-63430 Pont du Château (FR); GRASSO, Guiseppe, F-63340 Le Breuil Sur Couze (FR)
(74) Mandataire: Rosolen-Delarue, Katell
(86) Numéro de dépôt international: PCT/EP2006/005730
(87) Numéro de publication internationale: WO 2007/003261

(56) Documents cités:
- EP-A- 0 150 753
- EP-A- 1 452 412
- FR-A- 2 515 121
- US-A1- 2003 121 119
- US-B1- 6 505 377

## Description

L'invention propose un bras d'entraînement d'un balai d'essuie-glace qui comporte :
- un tronçon d'extrémité arrière qui est fixé à un arbre d'entraînement du bras dans un mouvement de balayage alterné autour d'un axe A globalement vertical ;
- un tronçon d'extrémité avant libre qui est apte à porter le balai d'essuie-glace ; et
- un tronçon intermédiaire d'orientation principale longitudinale qui est déformable élastiquement au moins en partie et qui relie le tronçon arrière au tronçon avant, et qui comporte une âme centrale longitudinale qui est recouverte par une gaine externe,

Le document FR-A-2.515.121 décrit un tel bras d'entraînement pour lequel l'âme centrale est réalisée en matériau composite à base de fibres de verre, et pour lequel la gaine extérieure entoure la totalité de l'âme centrale et est réalisée en matériau composite à base de fibres de carbonne.

Une telle réalisation du tronçon intermédiaire du bras à partir de ces différents matériaux composites permet d'augmenter la rigidité du bras en torsion autour de son axe principal longitudinal, en comparaison avec un bras conventionnel dont la structure est métallique.

Selon ce document, la gaine externe, qui contribue à procurer au bras ses propriétés mécaniques, est une partie du bras qui est particulièrement exposée aux agressions extérieures tels que les chocs, la pollution ou les rayonnements ultraviolets. Ainsi, les propriétés mécaniques de la gaine extérieurs sont susceptibles d'évoluer avec le temps, réduisant par conséquent l'efficacité de l'essuyage du panneau vitré.

L'invention a pour but de proposer un bras d'entraînement pour lequel les agressions extérieures subies par le bras ont des conséquences relativement faibles sur les propriétés mécaniques du bras.

Dans ce but, l'invention propose un bras d'entraînement du type décrit par exemple dans le document EP-A-0150753, **caractérisé en ce que** au moins une portion de l'âme centrale consiste en une plaque multicouches réalisée par superposition de couches globalement horizontales de matériaux et/ou d'épaisseurs différentes.

Selon d'autres caractéristiques de l'invention :
- la plaque multicouches comporte au moins une couche réalisée en matériau composite à base de fibres de verre et/ou de carbone ;
- la plaque multicouches comporte une couche qui est réalisée en métal, notamment en acier ;
- la plaque multicouches comporte une couche qui est réalisée en matière thermodurcissable ;
- la plaque multicouches comporte une partie formant des ondulations d'orientation globalement transversale ;
- l'âme centrale comporte une tige longitudinale avant rigide qui s'étend globalement longitudinalement vers l'avant en prolongeant vers l'avant la plaque multicouches ;
- la raideur de la tige avant en flexion dans un plan longitudinal vertical est supérieure à la raideur de la plaque multicouches ;
- l'extrémité longitudinale arrière de la tige avant est fixée à l'extrémité avant de la plaque multicouches par emboîtement ;
- le tronçon arrière du bras et/ou le tronçon avant du bras est réalisé par surmoulage de matière plastique autour d'une extrémité associée de l'âme centrale ;
- la plaque multicouches s'étend au moins en partie à l'intérieur du tronçon arrière du bras d'entraînement ;
- la gaine externe est réalisée par surmoulage de matière plastique autour de l'âme centrale.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective du bras d'entraînement selon l'invention ;
- la figure 2 est une section axiale du bras représenté à la figure 1 ;
- la figure 3 est un détail à plus grande échelle de la section représentée à la figure 2, montrant la structure de la plaque multicouches ;
- la figure 4 est une représentation schématique avec arrachement d'un bras d'entraînement conforme à une variante de réalisation de l'invention pour lequel l'âme centrale comporte une tige avant ;
- les figures 5a et 5b sont des vues similaires à celle de la figure 2, montrant une variante de réalisation du bras comportant une tige avant, montrant deux exemples différents de la tige avec la plaque multicouches ;
- la figure 6 est une vue similaire à celle de la figure 2, montrant une autre variante de réalisation de l'invention pour laquelle la plaque multicouche forme en totalité l'âme centrale ; et
- la figure 7 est une vue similaire à celle de la figure 2, montrant encore une autre variante de réalisation de l'invention pour laquelle une zone de la plaque multicouches forme des ondulations transversales.

Pour la description de l'invention, on adoptera à titre non limitatif les orientations verticale, longitudinale et transversale selon le repère V, L, T indiqué aux figures.

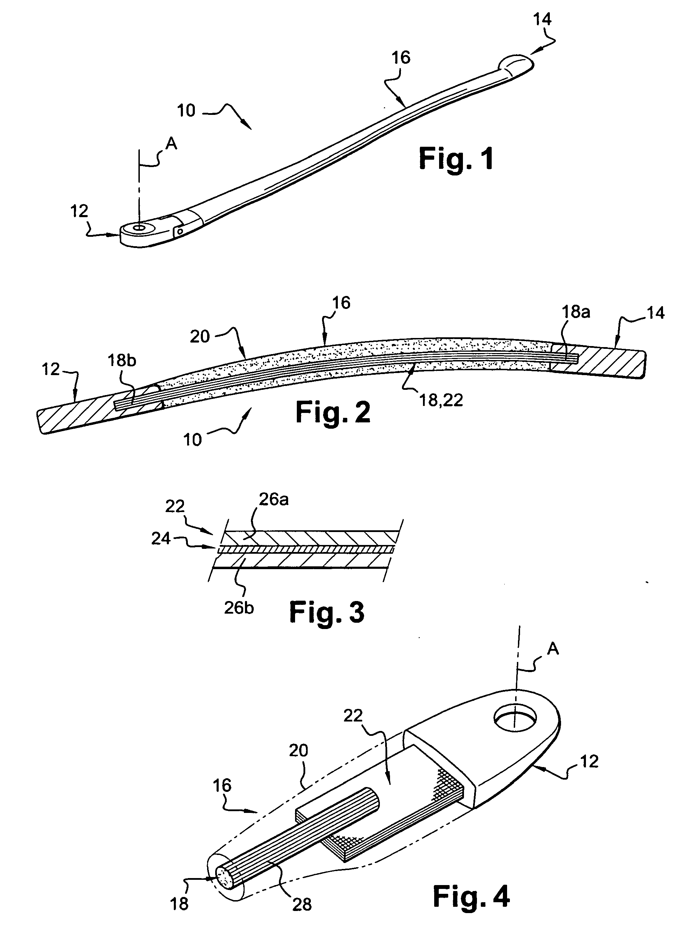

On adoptera aussi l'orientation d'avant en arrière comme étant la direction longitudinale et de gauche à droite en se reportant à la figure 2.

Dans la description qui va suivre, des éléments identiques, similaires ou analogues seront désignés par les mêmes chiffres de référence.

On a représenté aux figures un bras 10 d'entraînement d'un balai d'essuyage (non représenté) en balayage alterné par rapport à un panneau vitré (non représenté), autour d'un axe A globalement vertical.

Le bras 10 est d'orientation principale longitudinale et il comporte un tronçon d'extrémité arrière 12 par l'intermédiaire duquel le bras 10 est fixé à un arbre d'entraînement du balai 10 en balayage alterné autour de l'axe vertical A, un tronçon d'extrémité avant libre 14 qui est conformé de manière à permettre le montage du balai d'essuyage sur le bras 10, et un tronçon intermédiaire 16 d'orientation principale longitudinale qui relie le tronçon arrière 12 au tronçon avant 14.

Comme on peut le voir plus en détails à la figure 2, le tronçon intermédiaire 16 est réalisé en plusieurs parties, et il comporte principalement une âme centrale 18 qui s'étend globalement longitudinalement, dans le sens de la longueur du tronçon intermédiaire 16, et il comporte aussi une gaine externe 20 qui recouvre en totalité l'âme centrale 18.

L'âme centrale 18 forme l'élément structurel du tronçon intermédiaire 16, et elle est conformée de manière à favoriser la déformation du tronçon intermédiaire 16 selon une première direction et de manière à réduire les déformations du tronçon intermédiaire 16 selon d'autres directions.

Selon un mode de réalisation préféré, l'âme centrale 18 est réalisée de manière à favoriser la flexion du tronçon intermédiaire 16 dans un plan globalement longitudinal vertical pour permettre un déplacement du tronçon avant 14 globalement verticalement lors du mouvement de balayage, de manière à maintenir le balai d'essuyage en appui contre le panneau vitré.

De plus, l'âme centrale 18 est conformée de manière à limiter les déformations du tronçon intermédiaire 16 en torsion autour de son axe principal longitudinal et en flexion dans un plan horizontal globalement parallèle au panneau vitré. En effet, de telles déformations du tronçon intermédiaire modifient l'orientation du balai d'essuyage par rapport au panneau vitré à essuyer, ce qui réduit l'efficacité de l'essuyage.

La gaine 20 est réalisée en un matériau neutre de sorte qu'elle est déformable élastiquement de manière similaire selon toutes les directions de déformation.

Les déformations élastiques de la gaine 20 n'influent donc pas sur les déformations de l'âme 18, ni sur la qualité de l'essuyage.

La forme de la gaine 20 est déterminée en fonction de l'aspect extérieur voulu du bras 10. Selon une variante de réalisation, la gaine est conformée de manière aérodynamique pour que les mouvements d'air produits lors du déplacement du véhicule génèrent un effort d'appui du balai d'essuyage sur le panneau vitré.

Aussi, la gaine 20 protège l'âme centrale 18 des diverses agressions extérieures pouvant provoquer une détérioration des propriétés mécaniques de l'âme centrale 18.

Conformément à l'invention, et comme on peut le voir plus en détails à la figure 3, l'âme centrale 18 comporte une portion 22 qui consiste en une superposition verticale de couches globalement horizontales de matériaux et/ou d'épaisseurs différentes. Cette portion 22 de l'âme centrale 18 forme ainsi une plaque dite "multicouches".

Cette plaque multicouches 22 est formée de manière qu'elle favorise les déformations du tronçon intermédiaire 16 en flexion dans le plan longitudinal vertical, et de manière à limiter les autres déformations du tronçon intermédiaire 16, c'est-à-dire en flexion dans un plan horizontal et en torsion autour de l'axe principal longitudinal du tronçon intermédiaire16.

Les différentes couches de la plaque multicouches 22 sont réalisées de préférence en matériau composite, par exemple à base de fibres de verre ou à base de fibres de carbone, et l'orientation des fibres est déterminée en fonction des déformations de la plaque multicouches à favoriser et/ou à limiter.

Ainsi, par exemple, les fibres de certaines couches sont orientées parallèlement à l'axe principal longitudinal du tronçon intermédiaire 16, et d'autres fibres sont inclinées à 45 degrés ou à 90 degrés par rapport à l'axe principal longitudinal du tronçon intermédiaire 16.

Selon une variante de réalisation de l'invention, une couche centrale de la plaque multicouches 22 est réalisée en métal, par exemple en acier.

L'utilisation de l'acier permet, entre autres, de limiter les déformations permanentes du tronçon intermédiaires dues au fluage de la matière plastique formant les autres couches de la plaque 22, qui est provoqué par les efforts que le tronçon intermédiaire 16 subit de manière continue.

Selon une variante de réalisation, une couche centrale de la plaque multicouches 22 est réalisée en matière thermodurcissable. Une matière thermodurcissable est moins sensible au fluage qu'une matière thermoplastique.

Selon une variante de réalisation, la plaque 22 est réalisée de manière que les différentes couches sont agencées symétriquement par rapport à un plan horizontal médian de la plaque 22.

A titre d'exemple non limitatif, et comme représenté à la figure 3, la plaque multicouches 22 comporte une couche centrale 24 réalisée à base d'acier, et deux couches supérieures 26a et inférieure 26b identiques réalisées en matériau composite à base de fibre de verre. Il sera compris que l'invention n'est pas limitée à ce mode de réalisation, et que la plaque multicouches 22 peut comporter un nombre différent de couches 24, 26.

Selon un premier mode de réalisation de l'invention représenté à la figure 4, l'âme centrale 18 est réalisée en deux portions, la portion arrière étant formée par la plaque multicouches 22 et la portion avant par une tige longitudinale avant 28 qui prolonge la plaque multicouches 22 vers l'avant.

La tige avant 28 est plus rigide que la plaque multicouches 22 en flexion dans le plan longitudinal vertical.

Selon le mode de réalisation de l'invention représenté à la figure 4, la tige avant 28 est fixée à la plaque multicouches 22 par l'intermédiaire de la gaine 20 qui est réalisée par surmoulage autour de la plaque multicouches 22 et autour de la tige avant 28.

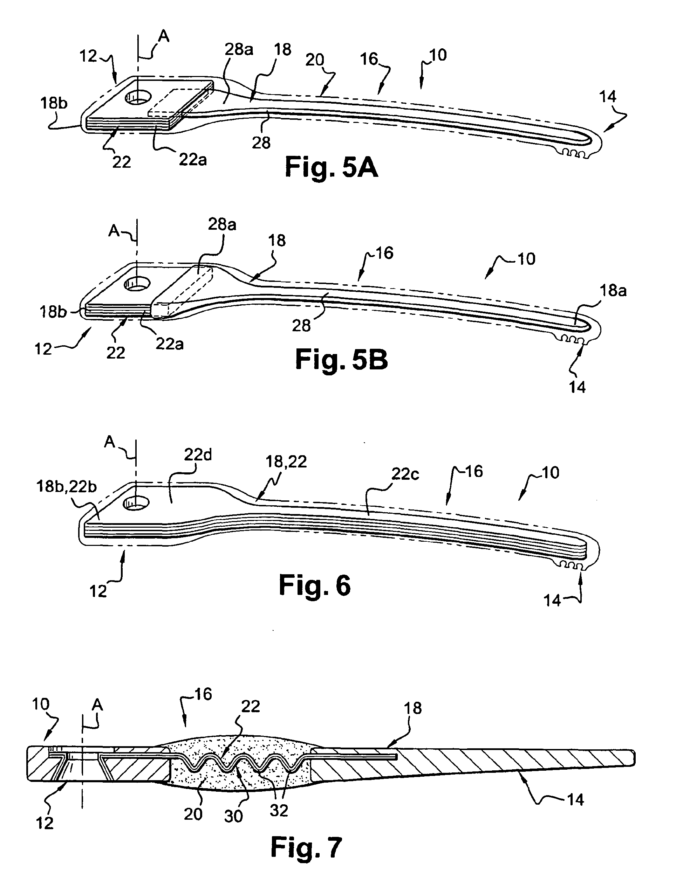

Selon une variante de réalisation, la tige avant 28 est fixée à la plaque multicouches 22 par emboîtement de l'extrémité arrière 28a de la tige avant 28 dans l'extrémité avant 22a de la plaque multicouches 22, comme on l'a représenté à la figure 5a, ou inversement, par emboîtement de l'extrémité arrière 28a de la tige avant 28 autour de l'extrémité avant 22a de la plaque multicouches 22, comme on peut le voir à la figure 5b.

Selon un autre mode de réalisation de l'invention représenté à la figure 6, l'âme centrale 18 est formée uniquement par la plaque multicouches 22 qui relie par conséquent le tronçon arrière 12 du bras 10 au tronçon avant 14.

La plaque multicouches 22 comporte en outre une partie arrière 22d relativement large, qui est conformée pour favoriser certaines déformations du tronçon avant 16, comme on l'a défini plus haut, et elle comporte une partie avant 22c de largeur réduite par rapport à la partie arrière 22d.

Selon une variante de réalisation représentée à la figure 7, la plaque multicouches 22 comporte une partie 30 formant des ondulations transversales 32, qui favorisent la flexion du tronçon intermédiaire 16 dans un plan longitudinal vertical.

Comme on l'a dit plus haut, le tronçon intermédiaire 16 du bras 10 relie le tronçon arrière 12 au tronçon avant 14. Ainsi, et comme on peut le voir notamment à la figure 2, les extrémités avant 18a et arrière 18b de l'âme centrale 18 sont reçues dans le tronçon arrière 12 et dans le tronçon avant 14, respectivement.

Selon un mode de réalisation préféré, le tronçon arrière 12 et le tronçon avant 14 sont réalisés par surmoulage de matière plastique autour de l'extrémité 18a, 18b associée de l'âme centrale 18.

Ensuite, la gaine externe 20 est réalisée par surmoulage autour de l'âme centrale 18 et autour d'une partie du tronçon arrière 12 et du tronçon avant 14, de manière à solidariser définitivement les différents composants du bras 10.

Conformément à l'invention, l'extrémité arrière 22b de la plaque multicouches 22 forme l'extrémité arrière 18b de l'âme centrale 18. Ainsi, le tronçon arrière 12 est réalisé par surmoulage autour de l'extrémité arrière 22b de la plaque multicouches 22. Selon une variante de réalisation représentée aux figures 5a et 5b, le tronçon arrière 12 est réalisé par surmoulage autour de la totalité de la plaque multicouches 22

La forme du bras d'entraînement 10 que l'on a représenté à la figure 1 est, de manière générale, spécifique à un modèle particulier de véhicule automobile. Par contre, le tronçon arrière 12 et le tronçon avant 14 sont de forme conventionnelle, pour la fixation du bras 10 à l'arbre d'entraînement et au balai d'essuyage, respectivement.

Ainsi, il est possible de réaliser deux bras 10 différents en utilisant des moules identiques pour réaliser les tronçons avant 12 et arrière 14 de chaque bras 10, seul l'outillage pour réaliser l'âme centrale 18 et la gaine externe 20 est spécifique au bras 10 à réaliser.

L'invention a été décrite en référence à un bras pour lequel le tronçon intermédiaire 16 est d'orientation principale longitudinale. Il sera compris que l'invention n'est pas limitée à un bras 10 pour lequel le tronçon intermédiaire 16 est rectiligne, et qu'elle concerne aussi un bras d'entraînement pour lequel le tronçon intermédiaire est cintré au moins en partie.

## Revendications

1. Bras (10) d'entraînement d'un balai d'essuie-glace comportant :
- un tronçon d'extrémité arrière (12) qui est fixé à un arbre d'entraînement du bras (10) dans un mouvement de balayage alterné autour d'un axe A globalement vertical ;
- un tronçon d'extrémité avant libre (14) qui est apte à porter le balai d'essuie-glace ; et
- un tronçon intermédiaire (16) d'orientation principale longitudinale qui est déformable élastiquement au moins en partie et qui relie le tronçon arrière (12) au tronçon avant (14), et qui comporte une âme (18) centrale longitudinale qui est recouverte par une gaine externe (20) et dans lequel au moins une portion de l'âme (18) centrale consiste en une plaque multicouches (22) réalisée par superposition de couches (24, 26a, 26b) globalement horizontales de matériaux et/ou d'épaisseurs différentes,
**caractérisé en ce que** la plaque multicouches (22) comporte au moins (26a, 26b) une couche réalisée en matériau composite.

2. Bras (10) d'entraînement selon la revendication précédente, **caractérisé en ce que** le matériau composite est à base de fibres de verre et/ou de carbone.

3. Bras (10) d'entraînement selon l'une quelconque des revendications précédentes, **caractérisé en ce que** la plaque multicouches (22) comporte une couche (24) qui est réalisée en métal, notamment en acier.

4. Bras (10) d'entraînement selon l'une quelconque des revendications précédentes, **caractérisé en ce que** la plaque multicouches (22) comporte une couche qui est réalisée en matière thermodurcissable.

5. Bras (10) d'entraînement selon l'une quelconque des revendications précédentes, **caractérisé en ce que** la plaque multicouches (22) comporte une partie (30) formant des ondulations (32) d'orientation globalement transversale.

6. Bras (10) d'entraînement selon l'une quelconque des revendications précédentes, **caractérisé en ce que** l'âme (18) centrale comporte une tige longitudinale avant (28) rigide qui s'étend globalement longitudinalement vers l'avant en prolongeant vers l'avant la plaque multicouches (22).

7. Bras (10) d'entraînement selon la revendication précédente, **caractérisé en ce que** la raideur de la tige avant (28) en flexion dans un plan longitudinal vertical est supérieure à la raideur de la plaque multicouches (22).

8. Bras (10) d'entraînement selon la revendication 6 ou 7, **caractérisé en ce que** l'extrémité longitudinale (28a) arrière de la tige avant (28) est fixée à l'extrémité avant (22a) de la plaque multicouches (22) par emboîtement.

9. Bras (10) d'entraînement selon l'une quelconque des revendications précédentes, **caractérisé en ce que** le tronçon arrière (12) du bras (10) et/ou le tronçon avant (14) du bras (10) est réalisé par surmoulage de matière plastique autour d'une extrémité associée (18a, 18b) de l'âme (18) centrale.

10. Bras (10) d'entraînement selon la revendication précédente, **caractérisé en ce que** la plaque multicouches (22) s'étend au moins en partie à l'intérieur du tronçon arrière (12) du bras (10) d'entraînement.

11. Bras (10) d'entraînement selon l'une quelconque des revendications précédentes, **caractérisé en ce que** la gaine externe (20) est réalisée par surmoulage de matière plastique autour de l'âme (18) centrale.

## Claims

1. A wiper arm of a windshield wiper blade including:
- a rear end portion (12) which is fixed to a wiper arm driving shaft, into an alternate wiping motion of a substantially vertical axis A ;
- a free front end portion (14) which is able to support the windshield wiper blade ; and
- an intermediate portion (16) having a longitudinal main direction which can be resiliently at least partly deformed and which connects the rear portion (12) to the front portion (14), and which includes a longitudinal central core (18) which is covered with an outer sheath (20) and wherein at least one part of the central core (18) consists in a multilayer plate (22) realized by the stacking of substantially horizontal layers (24, 26a, 26b) of various materials and/or thickness,
**Characterized in that** the multilayer plate (22) includes at least (26a, 26b) a layer made of a composite material.

2. A wiper arm according to the preceding claim, **characterized in that** the composite material is glass and/or carbon fibre-based.

3. A wiper arm according to any one of the preceding claims, **characterized in that** the multilayer plate (22) includes a layer (24) which is made of metal, more particularly of steel.

4. A wiper arm according to any one of the preceding claims, **characterized in that** the multilayer plate (22) includes a layer which is made of a thermosetting material.

5. A wiper arm according to any one of the preceding claims, **characterized in that** the multilayer plate (22) includes a part forming waves (32) having a substantially transversal direction.

6. A wiper arm according to any one of the preceding claims, **characterized in that** the central core (18) includes a rigid longitudinal front rod (28) which extend substantially longitudinally frontward as a front extension of the multilayer plate (22).

7. A wiper arm according to the preceding claim, **characterized in that** the flexional stiffness of the front rod (28) in a vertical longitudinal plane is greater than the stiffness of the multilayer plate (22).

8. A wiper arm according to claims 6 or 7, **characterized in that** the rear longitudinal end (28a) of the front rod (28) is snapped into the front end (22a) of the multilayer plate (22).

9. A wiper arm according to any one of the preceding claims, **characterized in that** the rear portion (12) of the arm (10) and/or the front portion (14) of the arm (10) is/are made by overmolding plastic material around an associated end (18a, 18B) of the central core (18).

10. A wiper arm according to the preceding claim, **characterized in that** the multilayer plate (22) extend at least partially inside the rear portion (12) of the wiper arm (10).

11. A wiper arm (10) according to any one of the preceding claims, **characterized in that** the outer sheath (20) is obtained by overmolding plastic material around the central core (18).

## Patentansprüche

1. Wischerarm (10) eines Scheibenwischerblatts, der folgende Teile umfaßt:
- Einen hinteren Endabschnitt (12), der an einer Antriebwelle des Arms (10) in einer anwechselnden Wischbewegung um eine insgesamt vertikale Achse A befestigt ist;
- Einen freien vorderen Endabschnitt (14), der geeignet ist, das Scheibenwischerblatt zu tragen;
- Einen Zwischenabschnitt (16) mit hauptsächlicher Längsausrichtung, der zumindest teilweise elastisch verformbar ist, und der den hinteren Abschnitt (12) mit dem vorderen Abschnitt (14) verbindet, und der einen mittleren länglichen Kern (18) umfaßt, der von einer Außenhülle (20) abgedeckt ist, und in dem mindestens ein Abschnitt des mittleren Kerns (18) aus einer mehrschichtigen Platte (22) besteht, die durch Aufeinanderlegen von insgesamt horizontalen Schichten (24, 26a, 26b) aus verschiedenen Materialarten und/oder Dicken ausgeführt ist,
**dadurch gekennzeichnet, daß** die mehrschichtige Platte (22) mindestens (26a, 26b) eine aus Verbundmaterial ausgeführte Schicht umfaßt.

2. Wischerarm (10) nach dem vorstehenden Anspruch, **dadurch gekennzeichnet, daß** das Verbundmaterial auf Glas- und/oder Kohlenstoffasern beruht.

3. Wischerarm (10) nach einem beliebigen der vorstehenden Ansprüche, **dadurch gekennzeichnet, daß** die mehrschichtige Platte (22) eine Schicht (24) umfaßt, die aus Metall und insbesondere aus Stahl ausgeführt ist.

4. Wischerarm (10) nach einem beliebigen der vorstehenden Ansprüche, **dadurch gekennzeichnet, daß** die mehrschichtige Platte (22) eine Schicht umfaßt, die aus wärmeaushärtendem Material ausgeführt ist.

5. Wischerarm (10) nach einem beliebigen der vorstehenden Ansprüche, **dadurch gekennzeichnet, daß** die mehrschichtige Platte (22) einen Teil (30) umfaßt, der Wellen (32) mit insgesamt quer verlaufender Ausrichtung bildet.

6. Wischerarm (10) nach einem beliebigen der vorstehenden Ansprüche, **dadurch gekennzeichnet, daß** der mittlere Kern (18) einen starren vorderen Längsstab (28) umfaßt, der sich insgesamt in Längsrichtung nach vorne erstreckt und dabei die mehrschichtige Platte (22) nach vorne verlängert.

7. Wischerarm (10) nach dem vorstehenden Anspruch, **dadurch gekennzeichnet, daß** die Steifigkeit des vorderen Stabs (28) in Biegung in einer vertikalen Längsebene größer als die Steifigkeit der mehrschichtigen Platte (22) ist.

8. Wischerarm (10) nach dem vorstehenden Anspruch 6 oder 7, **dadurch gekennzeichnet, daß** das hintere Längsende (28a) des vorderen Stabs (28) am vorderen Ende (22a) der mehrschichtigen Platte (22) durch Einstecken befestigt ist.

9. Wischerarm (10) nach einem beliebigen der vorstehenden Ansprüche, **dadurch gekennzeichnet, daß** der hintere Abschnitt (12) des Arms (10) und/oder der vordere Abschnitt (14) des Arms (10) durch Einspritzen von Kunststoff um ein zugehöriges Ende (18a, 18b) des mittleren Kerns (18) ausgeführt ist.

10. Wischerarm (10) nach dem vorstehenden Anspruch, **dadurch gekennzeichnet, daß** sich die mehrschichtige Platte (22) mindestens teilweise im Innern des hinteren Abschnitts (12) des Wischerarms (10) erstreckt.

11. Wischerarm (10) nach einem beliebigen der vorstehenden Ansprüche, **dadurch gekennzeichnet, daß** die Außenhülle (20) durch Einspritzen von Kunststoff um den mittleren Kern (18) ausgeführt ist.
